# EUROPEAN PATENT APPLICATION

(11) **EP 4 729 893 A1**
(43) Date of publication of application: **22.04.2026**
(21) Application number: 25204420.1
(22) Date of filing: 24.09.2025
(51) Int. Cl.: G01F 11/00, G01F 11/28, G01F 15/00

(54) **POWDER BRIDGE VALVE METERING DEVICE FOR DRY BATTERY ELECTRODE MANUFACTURING**

(30) Priority: 21.10.2024 US 202418922138
(71) Applicant: Tesla, Inc., Austin, TX 78725 (US)
(72) Inventor: MATSUMOTO, Matthew Thomas, Austin, 78725 (US); YAHIAOUI, Fahem, Austin, 78725 (US); JIN, Shikai, Austin, 78725 (US); THAXTER, Giles William James, Austin, 78725 (US); KRAWCZYK, Jack, Austin, 78725 (US)
(74) Representative: Zacco Sweden AB

(57) **Abstract**

A powder dispensing apparatus having an elongate wedge-shaped hopper including one or more fluidized plates is described. The powder dispensing apparatus can be positioned above a pair of calender rolls to distribute a powder, such as a dry electrode material onto the calender rolls. Such a fluidized wedge-shaped hopper advantageously allows for an accurate and/or controlled rate of powder distribution across or substantially across the length of a calender roll.

## Description

### INCORPORATION BY REFERENCE TO ANY PRIORITY APPLICATIONS

This application claims priority to U.S. Patent Application No. 18/922,138, entitled "POWDER BRIDGE VALVE METERING DEVICE FOR DRY BATTERY ELECTRODE MANUFACTURING," filed on October 21, 2024, the technical disclosure of which is hereby incorporated by reference in its entirety and for all purposes.

### BACKGROUND

### Field

The present disclosure relates generally to a powder dispensing apparatus, particularly a powder dispensing apparatus for dispensing dry electrode powder onto a calender roll.

### Description of the Related Art

Electrode films can be created by calendering a dry electrode powder. The quality of an electrode film is dependent on the distribution of the dry electrode powder onto the calender roll system because even powder distribution improves film density uniformity once the powder has been calendered. Thus, an even distribution of dry electrode powder is required to create a high-quality energy storage electrode film. To create an even distribution of dry electrode powder, the electrode powder must be evenly dispensed across the length of the calender roll and the dispensing rate of the dry electrode powder must be controlled.

Accordingly, there is a need for a powder dispensing apparatus for dispensing dry electrode powder which can evenly dispense dry electrode powder across the length of a calender roll and create a high-quality energy storage electrode film

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In some aspects, a powder dispensing apparatus is described. The powder dispensing apparatus comprises a first planar plate comprising a fluidization section; a second planar plate, wherein the first and second planar plates are positioned to form at least a portion of an elongate wedge-shaped hopper; an outlet positioned at a first end of the elongate wedge-shaped hopper; and an inlet positioned at a second end of the elongate wedge-shaped hopper, wherein the first and second ends are opposite ends of the elongate wedge-shaped hopper.

In some embodiments, a first edge of the first planar plate and a first edge of the second planar plate define the outlet. In some embodiments, the fluidization section comprises a porous section, a pressure chamber, and a manifold. In some embodiments, the porous section is configured to have compressed dry air pass therethrough. In some embodiments, the apparatus further comprises a hopper depth sensor. In some embodiments, the apparatus further comprises a dispensed depth sensor. In some embodiments, the first planar plate is positioned on a first plane; the second planar plate is positioned on a second plane; and the first and second planes form a wedge with an intersection angle of about 10-170 degrees. In some embodiments, the second planar plate comprises a second fluidization section. In some embodiments, the first planar plate and the second planar plate are configured to pivot. In some embodiments, at least one of the first and second planar plates are rectangular in shape. In some embodiments, the outlet is configured to open and close. In some embodiments, the outlet is configured to have an open position, a closed position, and a dispensing position. In some embodiments, the apparatus further comprises a position controller. In some embodiments, the apparatus further comprises a first pivot positioned along a second edge of the first planar plate and a second pivot positioned along a second edge of the second planar plate. In some embodiments, the apparatus comprises one or more actuators. In some embodiments, the one or more actuators are configured to rotate the first planar plate around the first pivot and the second planar plate around the second pivot.

In some aspects a system for forming an energy storage device electrode film is described. The system for forming an energy storage device electrode film comprises any one of the powder dispensing apparatuses described above; and a calendering apparatus positioned below the outlet.

In some aspects a method of powder distribution is described. The method comprises loading an elongate wedge-shaped hopper with a powder to form a bridged powder, wherein the elongate wedge-shaped hopper comprises a planar plate comprising a fluidization section; applying a gas from the fluidization section to the bridged powder to form a fluidized powder; and dispensing a linear stream of the fluidized powder out of an elongate outlet.

In some embodiments, the step of applying the gas comprises intermittently applying the gas. In some embodiments, the method further comprises stopping applying the gas to form a second bridged powder. In some embodiments, the method further comprises adjusting a width of the elongate outlet. In some embodiments, the method further comprises sensing a level of the powder in the elongate wedge-shaped hopper. In some embodiments, the method further comprises opening the elongate outlet in the elongate wedge-shaped hopper. In some embodiments, the method further comprises closing the elongate outlet in the elongate wedge-shaped hopper. In some embodiments, the method further comprises distributing the linear stream of the fluidized powder onto a pair of rollers of a calender roll device. In some embodiments, the method further comprises sensing a level of the powder on the pair of rollers.

### BRIEF DESCRIPTION OF THE DRAWINGS

The present inventions are described with reference to the accompanying drawings, in which like reference characters reference like elements, and wherein:
FIG. 1 is a perspective view illustration of a system comprising a powder dispensing apparatus and adjacent calender rolls, according to some embodiments.
FIG. 2 is a block diagram illustrating a method of powder distribution.
FIG. 3A is a side view illustration of a powder dispensing apparatus in a closed arrangement, according to some embodiments.
FIG. 3B is a side view illustration of a powder dispensing apparatus in a dispensing arrangement, according to some embodiments.
FIG. 3C is a side view illustration of a powder dispensing apparatus in an open arrangement, according to some embodiments.
FIG. 4 is a side view illustration of a powder dispensing apparatus including sensors, according to some embodiments.
FIG. 5 is a side view illustration of a powder dispensing apparatus, according to some embodiments.
FIG. 6A is a perspective view illustration of a plate, according to some embodiments.
FIG. 6B is a perspective view illustration of a manifold, according to some embodiments.
FIG. 7 is a perspective view illustration of a plate, according to some embodiments.
FIG. 8 is a block diagram illustrating the electronics of the powder dispensing apparatus.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to a powder dispensing apparatus having an elongate wedge-shaped hopper including one or more fluidized plates. The powder dispensing apparatus can be positioned above a pair of calender rolls to distribute a powder, such as a dry electrode material, onto the calender rolls. Such a fluidized wedge-shaped hopper advantageously allows for an accurate and/or controlled rate of powder distribution across or substantially across the length of a calender roll. Because the flow rate is controlled and accurate across the length of the calender roll, the quality of the calendered material (e.g., electrode films) may be improved (e.g., improved film density uniformity). Electrode films formed by the wedge-shaped hopper may thereby have advantageously improved qualities and form the energy storage device with improved performances thereof. In addition, the lack of or substantial lack of mechanically moving parts during the dispensing process may also improve the robustness of the dispensing apparatus.

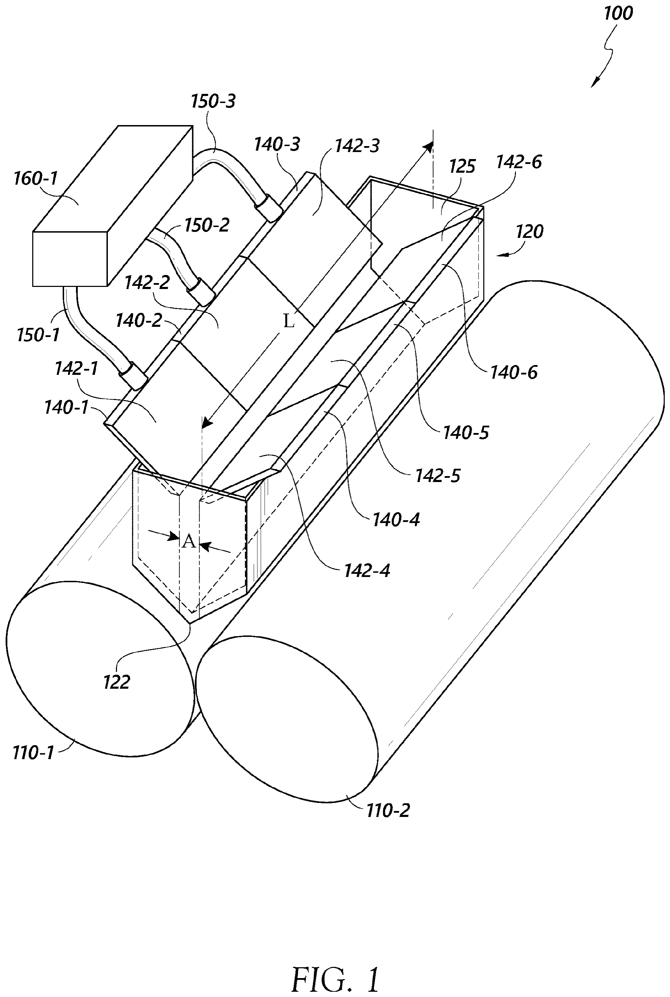

FIG. 1 is a perspective view of a system 100 including a powder dispensing apparatus 120 and a pair of calender rolls 110-1 and 110-2. The pair of calender rolls 110-1 and 110-2 form a portion of a calender rolling apparatus which is not illustrated in its entirety. The powder dispensing apparatus 120 is positioned above the calender rolls 110 and includes an outlet 122 positioned over the calender rolls 110. The powder dispensing apparatus 120 may hold a dry powder and can distribute the powder evenly onto the calender rolls 110. The powder may be distributed in a linear shape across the length of the calender roll 110. The powder dispensing apparatus 120 is positioned over the calender rolls 110 such that it may allow a powder to flow from the outlet 122 of the powder dispensing apparatus 120 onto the calender rolls 110 via gravity. The powder dispensed from the powder dispensing apparatus 120 can be calendered by the pair of calender rolls 110-1 and 110-2 to form an energy storage device electrode film. The powder dispensing apparatus 120 includes a hopper 125. The hopper 125 is elongate and extends across or substantially across the entire length of the pair of calender rolls 110-1 and 110-2. The hopper 125 has a length L. The outlet 122 has a width A. The hopper 125 is wedge-shaped and includes a plurality of plates 140 positioned along each side of the hopper 125. The plurality of plates 140 each includes a planar surface. As illustrated, the hopper 125 includes three plates 140-1, 140-2, and 140-3 positioned on a first side of the hopper 125 and three plates 140-4, 140-5, and 140-6 positioned on a second side of the hopper 125. The plates 140-1 through 140-6 can be fluidized, wherein each of the plates 140-1, 140-2, and 140-3 is attached to a fluid line 150-1, 150-2, and 150-3 connected to an air supply 160-1 which can supply gas to the plates 140-1, 140-2, and 140-3. Each of the plates 140-4, 140-5, and 140-6 is attached to a fluid line 150-4, 150-5, and 150-6 connected to an air supply 160-2 which can supply gas to the plates 140-4, 140-5, and 140-6. Each of the plates 140-1, 140-2, 140-3, 140-4, 140-5, and 140-6 includes a surface 142-1, 142-2, 142-3, 142-4, 142-5, and 142-6 which is porous. The gas can pass through the surfaces 142-1 through 142-6 to fluidize powder placed in the hopper 125.

In some embodiments, the length of the hopper is, is about, is at least, or is at least about, 200mm, 300mm, 400mm, 500mm, 600mm, 700mm, 800mm, 900mm, 1000mm, 1100mm, 1200mm, 1300mm, 1400mm, 1500mm, 1600mm, 1700mm, 1800mm, 1900mm, 2000mm, 2100mm, 2200mm, 2300mm, 2400mm, 2500mm, 2600mm, 2700mm, 2800mm, 2900mm, 3000mm, or any range of values there between. In some embodiments, the outlet spans the length of the hopper. In some embodiments, the outlet spans the majority of the length of the hopper. In some embodiments, the outlet spans a percentage of the length of the hopper. In some embodiments, the outlet spans, spans about, spans at least, or spans at least about 20%, 25%, 30%, 35%, 40%, 45%, 50%, 55%, 60%, 65%, 70%, 75%, 80%, 85%, 90%, 95%, or 100% of the length of the hopper. In some embodiments, the width of the outlet can be between 2mm and 20mm, for example. In some embodiments, the hopper includes one plate positioned on each side of the hopper. In some embodiments, the hopper includes two plates positioned on each side of the hopper. In some embodiments, the hopper includes three plates positioned on each side of the hopper. In some embodiments, the hopper includes four plates positioned on each side of the hopper. In some embodiments, the hopper includes five plates positioned on each side of the hopper. In some embodiments, the hopper includes six plates positioned on each side of the hopper. In some embodiments, the hopper includes six or more plates positioned on each side of the hopper. In some embodiments, each plate is the same length. In some embodiments, the plates are each a different length. In some embodiments, the gas which can pass through the surface of each of the plates to fluidize the plate is compressed dry air.

In some embodiments, the gas can be temperature controlled. In some embodiments, the gas can have a temperature of, of about, at least, or at least about 0 K, 20 K, 40 K, 60 K, 80 K, 100 K, 120 K, 140 K, 160 K, 180 K, 200 K, 220 K, 240 K, 260 K, 280 K, 300 K, 320 K, 340 K, 360 K, 380 K, 400 K, 420 K, 440 K, 460 K, 480 K, 500 K, 520 K, 540 K, 560 K, 580 K, 600 K, 620 K, 640 K, 660 K, 680 K, or 700 K, or any range of values therebetween.

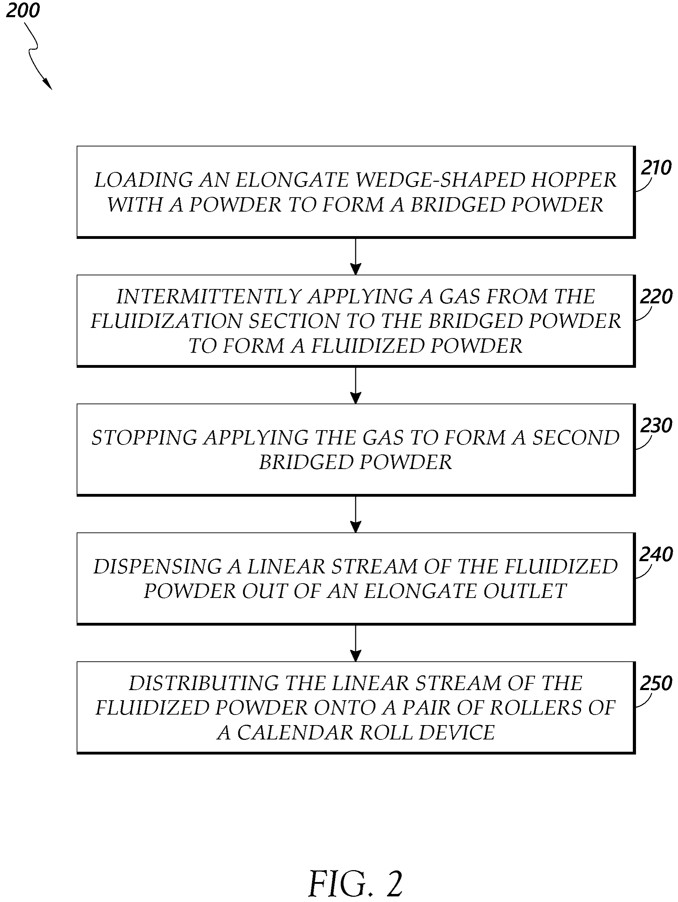

FIG. 2 illustrates a method 200 of powder distribution. The method 200 can be applied to the systems described herein. The method 200 can include any of the steps described herein in any order or exclude any of the steps described herein. At step 210 the method 200 includes loading an elongate wedge-shaped hopper with a powder to form a bridged powder. At step 220 the method 200 includes intermittently applying a gas from the fluidization section to the bridged powder to form a fluidized powder. At step 230 the method 200 includes stopping the application of the gas from the fluidization section to form a second bridged powder. At step 240 the method includes dispensing a linear stream of the fluidized powder out of an elongate outlet. At step 250 the method includes distributing the linear stream of the fluidized powder onto a pair of rollers of a calender roll device.

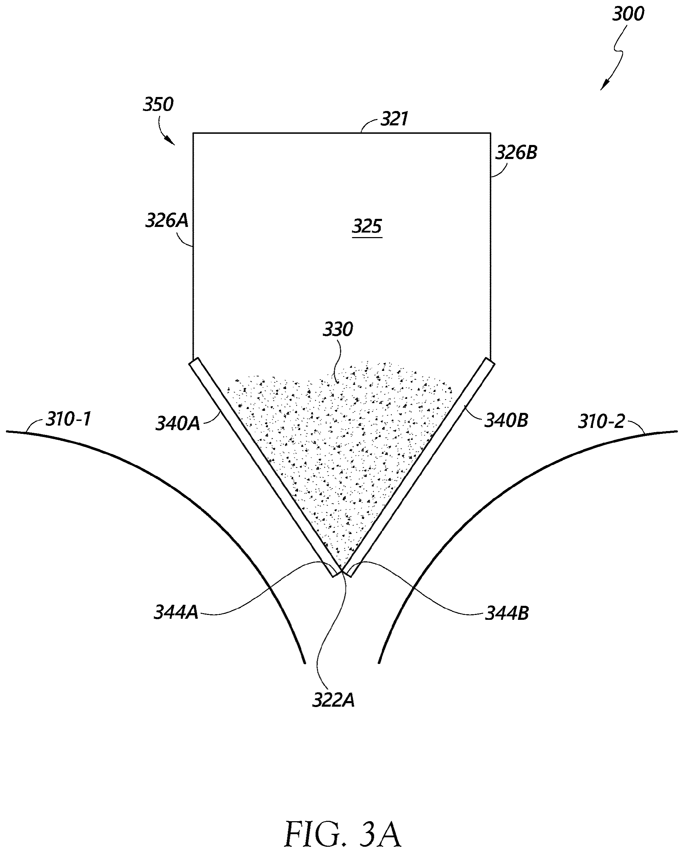

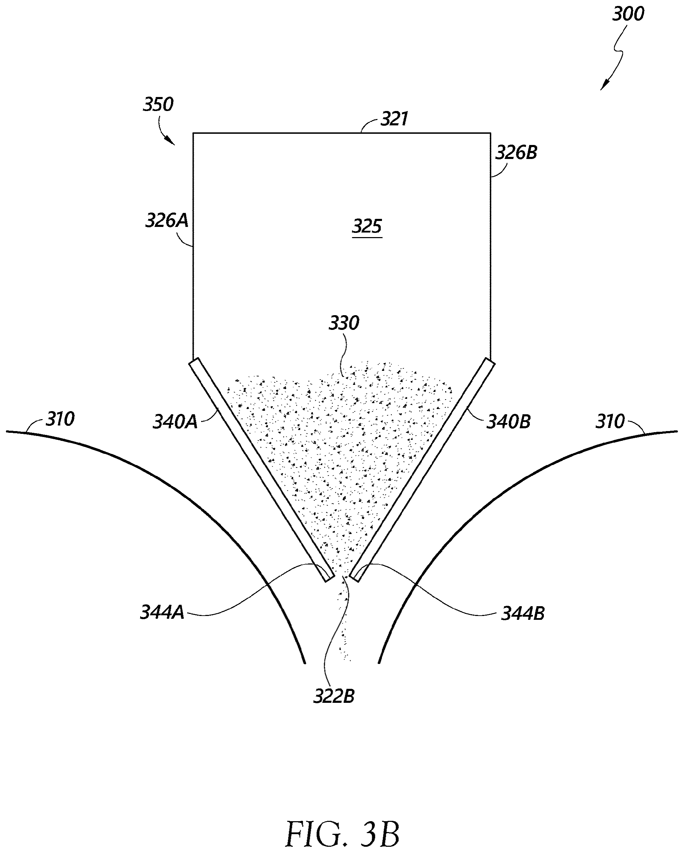

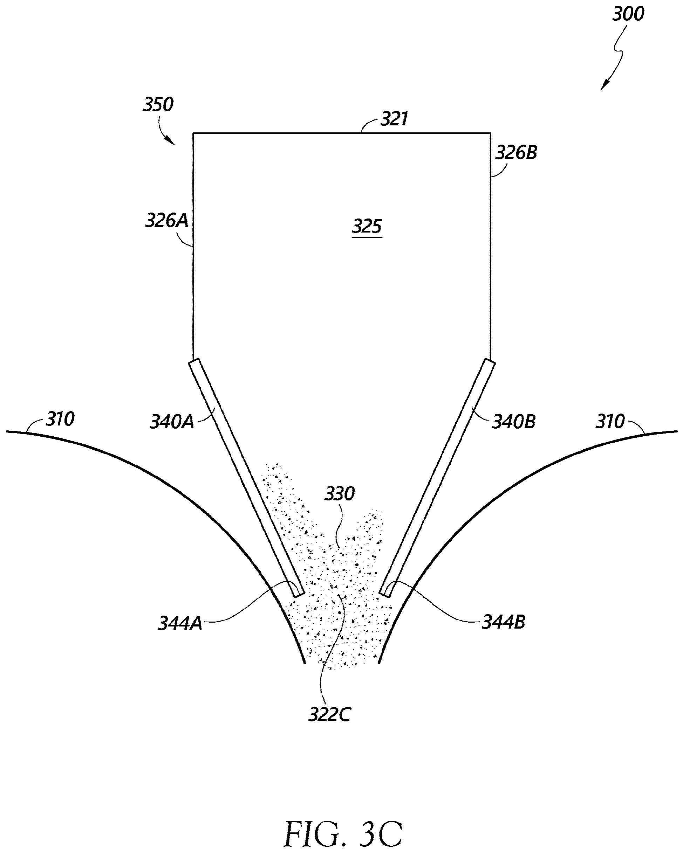

FIGS. 3A-3C illustrate side views of a system 300 including a powder dispensing apparatus 350 and a pair of calender rolls 310-1 and 310-2 in some embodiments. The powder dispensing apparatus 350 includes a hopper 325 and an inlet 321 in some embodiments. FIG. 3A illustrates a dispensing apparatus 350 including an outlet 322A. FIG. 3B illustrates a dispensing apparatus 350 including an outlet 322B. FIG. 3C illustrates a dispensing apparatus 350 including an outlet 322C. The hopper 325 holds a powder 330. The powder 330 is placed in the hopper 325 through the inlet 321 at a first end of the hopper 325. The inlet 321 is at the top of the hopper 325. The outlet 322A, 322B, or 322C is at a second end (i.e., bottom end) of the hopper 325. The outlet 322A, 322B, or 322C is at the bottom of the hopper 325. As illustrated in FIG. 3A, the outlet 322A is closed which inhibits powder from leaving the hopper 325. As illustrated in FIG. 3B, the outlet 322B is in a dispense position which allows a controlled stream of powder 330 to exit the hopper 325 through the outlet 322B. As illustrated in FIG. 3C, the outlet 322C is in an open position which allows the powder 330 to exit (e.g., dump out) of the hopper 325 in large volumes.

The hopper 325 is wedge-shaped and includes a first plate 340A, a second plate 340B, a first sidewall 326A, and a second sidewall 326B. The first plate 340A is planar and the second plate 340B is planar. The first plate 340A, and the second plate 340B, form the wedge shape of the hopper 325. The first sidewall 326A extends from the first plate 340A and the second sidewall 326B extends from the second plate 340B. The first sidewall 326A and the second sidewall 326B increase the volume of the hopper 325 and allow more powder 330 to be stored in the hopper 325. A first edge 344A of the first plate 340A is positioned near a first edge 344B of the second plate 340B to form the outlet 322A-C. As illustrated in FIG. 3A, the first edge 344A of the first plate 340A touches the first edge 344B of the second plate 340B to close the outlet 322A and inhibit the powder 330 from exiting the outlet 322A. As illustrated in FIG. 3B, the first edge 344A of the first plate 340A is spaced a small distance away from the first edge 344B of the second plate 340B. The distance between the first edge 344A of the first plate 340A and the first edge 344B of the second plate 340B places the outlet 322B in a dispense position which allows a controlled stream of powder 330 to exit the hopper 325. As illustrated in FIG. 3C, the first edge 344A of the first plate 340A is spaced a larger distance from the first edge 344B of the second plate 340B. The distance between the first edge 344A of the first plate 340A and the first edge 344B of the second plate 340B places the outlet 322C in an open position which allows the powder 330 to exit (e.g., dump out of) the hopper 325 in large volumes.

The first plate 340A and the second plate 340B are fluidized which reduces friction between the plates 340A, 340B and the powder 330. Friction between the plates 340A, 340B and the powder 330 can cause the powder 330 to bridge over the outlet 322B inhibiting the flow of powder 330 through the outlet 322B while the outlet 322B is in the dispense position illustrated in FIG. 3B. Advantageously, the design of the plates 340A and 340B, as discussed further herein, allows the fluidization of the plates to be controlled. The controlled fluidization enables a precise control of the flow rate of powder 330 through the outlet 322B. Fluidization can be turned on to cause powder 330 to flow through the outlet 322B and fluidization can be turned off to cause the powder 330 to bridge and inhibit the flow of the powder 330 out of the outlet 322B. By intermittently turning the fluidization on and off the rate of powder 330 flowing through the outlet 322B can be controlled and adjusted while the outlet 322B is in the dispense position. Advantageously, because the flow rate of powder 330 through the outlet 322B can be accurately controlled by the fluidization of the plates 340A and 340B, the hopper does not require mechanical adjustment during use. Once the outlet 322B is in the dispense position, the powder flow rate can be adjusted via the fluidization (e.g., the fluidization pressure and/or the time of fluidization can be adjusted to alter the flow rate).

In some embodiments, the first plate is fluidized. In some embodiments, the second plate is fluidized. In some embodiments, both the first plate and the second plate are fluidized. In some embodiments, fluidization of the first plate and the second plate can be simultaneous. In some embodiments, the fluidization of the first plate and the second plate can alternate.

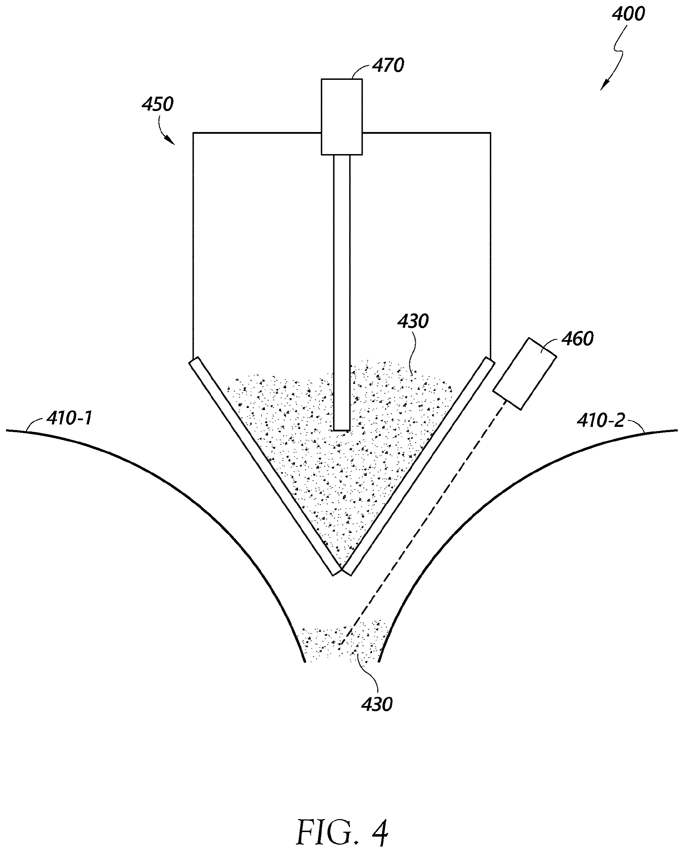

FIG. 4 illustrates a side view of a system 400 including a powder dispensing apparatus 450, a pair of calender rolls 410-1 and 410-2, powder 430, a hopper sensor 470, and a roller sensor 460 in some embodiments. The hopper sensor 470 senses properties of the powder 430 in the powder dispensing apparatus 450. The roller sensor 460 senses properties of the powder 430 distributed onto the calender rolls 410.

In some embodiments, the hopper sensor can sense the depth or height of the powder in the powder dispensing apparatus. In some embodiments, the hopper sensor can sense the temperature of the powder. In some embodiments, the hopper sensor can be a noncontact sensor (e.g., the sensor does not touch the powder).

In some embodiments, the roller sensor can sense the depth or height of the powder on the calender rolls. The roller sensor can sense the depth of the powder along the length of the calender rolls or the roller sensor can sense the depth of the powder at one or more points within the length of the calender rolls. In some embodiments, the roller sensor can sense the temperature of the powder. In some embodiments, the roller sensor can be a noncontact sensor (e.g., the sensor does not touch the powder).

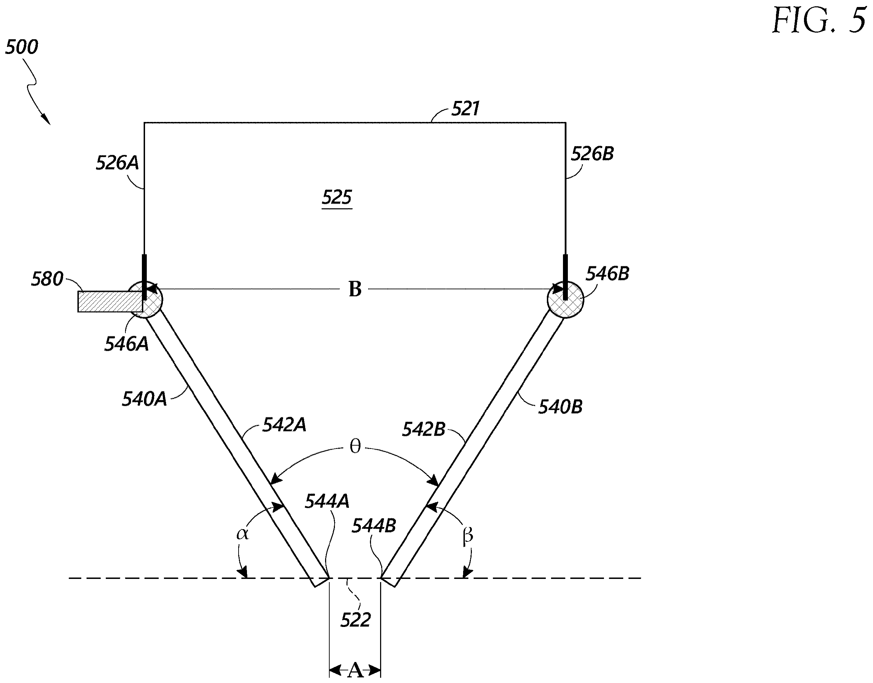

FIG. 5 illustrates a side view of a powder dispensing apparatus 500. The powder dispensing apparatus 500 includes an inlet 521, an outlet 522, and a hopper 525. The hopper 525 includes a first plate 540A and a second plate 540B which form a wedge shape and a first sidewall 526A and a second sidewall 526B which extend upward from the first plate 540A and the second plate 540B. The first plate 540A includes a surface 542A and the second plate 540B includes a surface 542B. The surface 542A of the first plate 540A is planar. The surface 542B of the second plate 540B is planar. A first pivot 546A connects the first plate 540A to the first sidewall 526A and a second pivot 546B connects the second plate 540B to the second sidewall 526B. The first pivot 546A is spaced a width B apart from the second pivot 546B. A linear actuator 580 attaches to the hopper 525. The outlet 522 is positioned along a first edge 544A of the first plate 540A and a first edge 544B of the second plate 540B opposite the pivots 546A and 546B. The outlet 522 has a width A. The linear actuator 580 adjusts the width B and/or the width A. The first plate 540A forms an angle α with a horizontal plane. The second plate 540B forms an angle β with the horizontal plane. The first plate 540A forms an angle θ with the second plate 540B (e.g., angle θ defines an intersection angle between a first plane defined by the surface of the first plate 540A and a second plane defined by the surface of the second plate 540B). The first plate 540A can rotate around the pivot 546A to increase or decrease the width A of the outlet 522 and increase or decrease the angle α. The second plate 540B can rotate around the pivot 546B to increase or decrease the width A of the outlet 522 and increase or decrease the angle β.

In some embodiments, the first pivot 546A and the second pivot 546B can be moved by a rotary actuator. In some embodiments, the first pivot 546A and the second pivot 546B can each include a precision locator which can be adjusted to define the dispensing position. In some embodiments, the linear actuator and/or rotary actuator are a position controller.

In some embodiments, the outlet 522 of the powder dispensing apparatus 500 moves from a closed position to a dispense position to an open position by rotating the first plate 540A around the first pivot 546A and by rotating the second plate 540B around the second pivot 546B. This allows the slope of the first plate 540A (e.g., angle α) and the slope of the second plate 540B (e.g., angle β) to increase as the outlet 522 is opened. In some embodiments, the first plate 540A rotates synchronously with the second plate 540B so that angle α and angle β are congruent. In some embodiments, the first plate 540A and the second plate 540B rotate independently so that angle α can be different from angle β. In some embodiments, the angle θ can be between 0 degrees and 180 degrees. In some embodiments, the outlet 522 of the powder dispensing apparatus 500 moves from the closed position to the dispense position to the open position by actuating the linear actuator 580. This allows the slope of the first plate 540A (e.g., angle α) and the slope of the second plate 400B (e.g., angle β) to stay constant.

In some embodiments, the pivots 546A and 546B, and the linear actuator 580 allow the powder dispensing apparatus 500 to be arranged to have a defined outlet width A and defined plate angles α and β while in the dispensing position. The outlet width A and plate angles α and β can be optimized depending on the properties of the powder 530 being dispensed from the powder dispensing apparatus 500 and/or the desired flow rate out of the powder dispensing apparatus 500.

Advantageously, once angle α and angle β and the outlet width A are defined for a dispensing position for a specific powder, the powder dispensing apparatus 500 can have no moving parts or minimal moving parts during operation. None of the variables (e.g., angle α and angle β and the outlet width A) need to be adjusted during operation to adjust the powder flow rate. Instead, the fluidization of the plates 540A and 540B, as discussed herein, can be controlled to optimize, adjust, and/or control the flow of powder out of the outlet 522 while in the dispensing position.

For example, the outlet width A can be 10mm, angle α can be 60 degrees, and angle β can be 60 degrees while in a dispensing position. In another example, the outlet width A can be 15mm, angle α can be 30 degrees, and angle β can be 30 degrees while in a dispensing position. In some embodiments, angle α can vary from 30 degrees to 80 degrees in the dispensing position. For example, angle α is, is about, is at least, or is at least about, 30 degrees, 31 degrees, 32 degrees, 33 degrees, 34 degrees, 35 degrees, 36 degrees, 37 degrees, 38 degrees, 39 degrees, 40 degrees, 41 degrees, 42 degrees, 43 degrees, 44 degrees, 45 degrees, 46 degrees, 47 degrees, 48 degrees, 49 degrees, 50 degrees, 51 degrees, 52 degrees, 53 degrees, 54 degrees, 55 degrees, 56 degrees, 57 degrees, 58 degrees, 59 degrees, 60 degrees, 61 degrees, 62 degrees, 63 degrees, 64 degrees, 65 degrees, 66 degrees, 67 degrees, 68 degrees, 69 degrees, 70 degrees, 71 degrees, 72 degrees, 73 degrees, 74 degrees, 75 degrees, 76 degrees, 77 degrees, 78 degrees, 79 degrees, or 80 degrees. In some embodiments, angle α can vary from 0 degrees to 45 degrees in the closed position. For example, angle α is, is about, is at least, or is at least about, 0 degrees, 1 degree, 2 degrees, 3 degrees, 4 degrees, 5 degrees, 6 degrees, 7 degrees, 8 degrees, 9 degrees, 10 degrees, 11 degrees, 12 degrees, 13 degrees, 14 degrees, 15 degrees, 16 degrees, 17 degrees, 18 degrees, 19 degrees, 20 degrees, 21 degrees, 22 degrees, 23 degrees, 24 degrees, 25 degrees, 26 degrees, 27 degrees, 28 degrees, 29 degrees, 30 degrees, 31 degrees, 32 degrees, 33 degrees, 34 degrees, 35 degrees, 36 degrees, 37 degrees, 38 degrees, 39 degrees, 40 degrees, 41 degrees, 42 degrees, 43 degrees, 44 degrees, or 45 degrees. In some embodiments angle α can vary from 45 degrees to 90 degrees in the open position. For example, angle α is, is about, is at least, or is at least about, 45 degrees, 46 degrees, 47 degrees, 48 degrees, 49 degrees, 50 degrees, 51 degrees, 52 degrees, 53 degrees, 54 degrees, 55 degrees, 56 degrees, 57 degrees, 58 degrees, 59 degrees, 60 degrees, 61 degrees, 62 degrees, 63 degrees, 64 degrees, 65 degrees, 66 degrees, 67 degrees, 68 degrees, 69 degrees, 70 degrees, 71 degrees, 72 degrees, 73 degrees, 74 degrees, 75 degrees, 76 degrees, 77 degrees, 78 degrees, 79 degrees, 80 degrees, 81 degrees, 82 degrees, 83 degrees, 84 degrees, 85 degrees, 86 degrees, 87 degrees, 88 degrees, 89 degrees, or 90 degrees. In some embodiments, angle β can vary from 30 degrees to 80 degrees in the dispensing position. For example, angle β is, is about, is at least, or is at least about, 30 degrees, 31 degrees, 32 degrees, 33 degrees, 34 degrees, 35 degrees, 36 degrees, 37 degrees, 38 degrees, 39 degrees, 40 degrees, 41 degrees, 42 degrees, 43 degrees, 44 degrees, 45 degrees, 46 degrees, 47 degrees, 48 degrees, 49 degrees, 50 degrees, 51 degrees, 52 degrees, 53 degrees, 54 degrees, 55 degrees, 56 degrees, 57 degrees, 58 degrees, 59 degrees, 60 degrees, 61 degrees, 62 degrees, 63 degrees, 64 degrees, 65 degrees, 66 degrees, 67 degrees, 68 degrees, 69 degrees, 70 degrees, 71 degrees, 72 degrees, 73 degrees, 74 degrees, 75 degrees, 76 degrees, 77 degrees, 78 degrees, 79 degrees, or 80 degrees. In some embodiments, angle β can vary from 0 degrees to 45 degrees in the closed position. For example, angle β is, is about, is at least, or is at least about, 0 degrees, 1 degree, 2 degrees, 3 degrees, 4 degrees, 5 degrees, 6 degrees, 7 degrees, 8 degrees, 9 degrees, 10 degrees, 11 degrees, 12 degrees, 13 degrees, 14 degrees, 15 degrees, 16 degrees, 17 degrees, 18 degrees, 19 degrees, 20 degrees, 21 degrees, 22 degrees, 23 degrees, 24 degrees, 25 degrees, 26 degrees, 27 degrees, 28 degrees, 29 degrees, 30 degrees, 31 degrees, 32 degrees, 33 degrees, 34 degrees, 35 degrees, 36 degrees, 37 degrees, 38 degrees, 39 degrees, 40 degrees, 41 degrees, 42 degrees, 43 degrees, 44 degrees, or 45 degrees. In some embodiments, angle β can vary from 45 degrees to 90 degrees in the open position. For example, angle β is, is about, is at least, or is at least about, 45 degrees, 46 degrees, 47 degrees, 48 degrees, 49 degrees, 50 degrees, 51 degrees, 52 degrees, 53 degrees, 54 degrees, 55 degrees, 56 degrees, 57 degrees, 58 degrees, 59 degrees, 60 degrees, 61 degrees, 62 degrees, 63 degrees, 64 degrees, 65 degrees, 66 degrees, 67 degrees, 68 degrees, 69 degrees, 70 degrees, 71 degrees, 72 degrees, 73 degrees, 74 degrees, 75 degrees, 76 degrees, 77 degrees, 78 degrees, 79 degrees, 80 degrees, 81 degrees, 82 degrees, 83 degrees, 84 degrees, 85 degrees, 86 degrees, 87 degrees, 88 degrees, 89 degrees, or 90 degrees. In some embodiments, width A can vary from 3mm to 25mm in the dispensing position. For example, width A is, is about, is at least, or is at least about, 3mm, 4mm, 5mm, 6mm, 7mm, 8mm, 9mm, 10mm, 11mm, 12mm, 13mm, 14mm, 15mm, 16mm, 17mm, 18mm, 19mm, 20mm, 21mm, 22mm, 23mm, 24mm, or 25mm in the dispensing position. In some embodiments width A can vary from 10mm to 80mm in the open position. For example, width A is, is about, is at least, or is at least about, 10mm, 11mm, 12mm, 13mm, 14mm, 15mm, 16mm, 17mm, 18mm, 19mm, 20mm, 21mm, 22mm, 23mm, 24mm, 25mm, 26mm, 27mm, 28mm, 29mm, 30mm, 31mm, 32mm, 33mm, 34mm, 35mm, 36mm, 37mm, 38mm, 39mm, 40mm, 41mm, 42mm, 43mm, 44mm, 45mm, 46mm, 47mm, 48mm, 49mm, 50mm, 51mm, 52mm, 53mm, 54mm, 55mm, 56mm, 57mm, 58mm, 59mm, 60mm, 61mm, 62mm, 63mm, 64mm, 65mm, 66mm, 67mm, 68mm, 69mm, 70mm, 71mm, 72mm, 73mm, 74mm, 75mm, 76mm, 77mm, 78mm, 79mm, or 80mm in the open position. In some embodiments, width A can be less than 2mm in the closed position. For example, width A is, is about, is at least, or is at least about, 0mm, 0.5mm, 1mm, or 2mm.

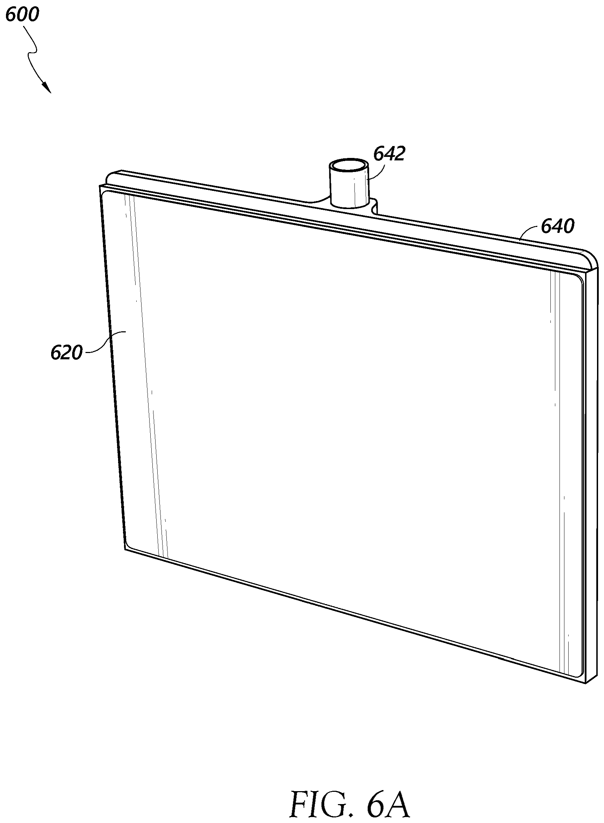

FIG. 6A illustrates a perspective view of a plate 600. The plate 600 includes a surface 620, a manifold 640, and an inlet 642 in some embodiments. The surface 620 is planar and rectangular. The surface 620 is porous and includes a plurality of pores (e.g., minute holes or pinholes) spaced across the surface 620 (e.g., spaced evenly across the surface 620 or spaced randomly across the surface 620). The inlet 642 is configured to attach to a fluid line which supplies gas to the manifold 640. The manifold 640 supports the surface 620 and distributes gas to flow through the porous surface.

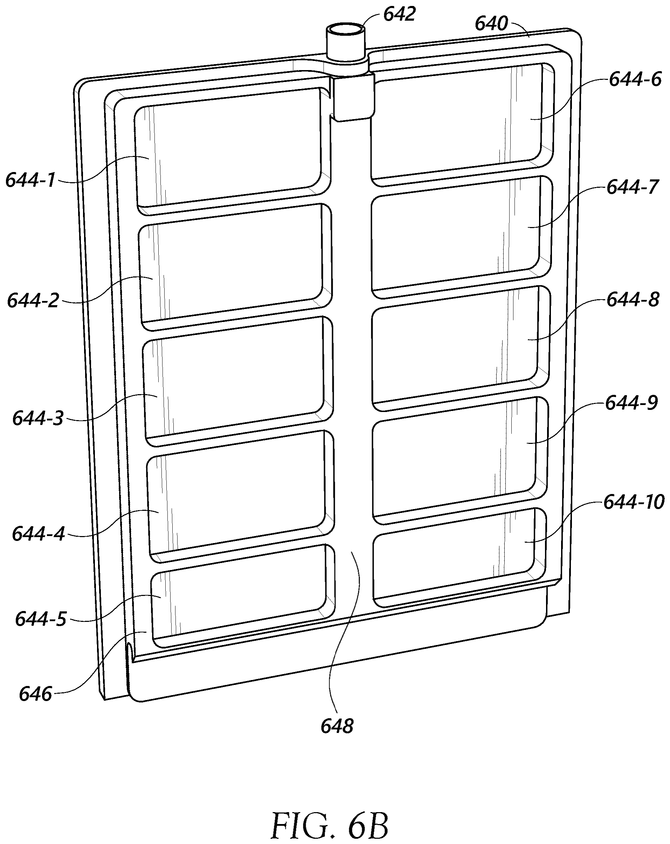

FIG. 6B illustrates a perspective view of a manifold 640. In some embodiments, the manifold 640 includes an inlet 642 which allows gas to enter the manifold 640. The inlet 642 fluidically connects to a flow channel 648 which fluidically connects to a plurality of pressure chambers 644-1 through 644-10. As illustrated, the manifold 640 includes two columns of pressure chambers (e.g., 644-1, 644-2 644-3, 644-4, 644-5 and 644-6 644-7, 644-8, 644-9, 644-10) and five rows of pressure chambers (e.g., 644-1, 644-6 and 644-2, 644-7 and 644-3, 644-8 and 644-4, 644-9 and 644-5, 644-10). The manifold 640 also includes a frame 646 which defines the edges of the pressure chambers 644.

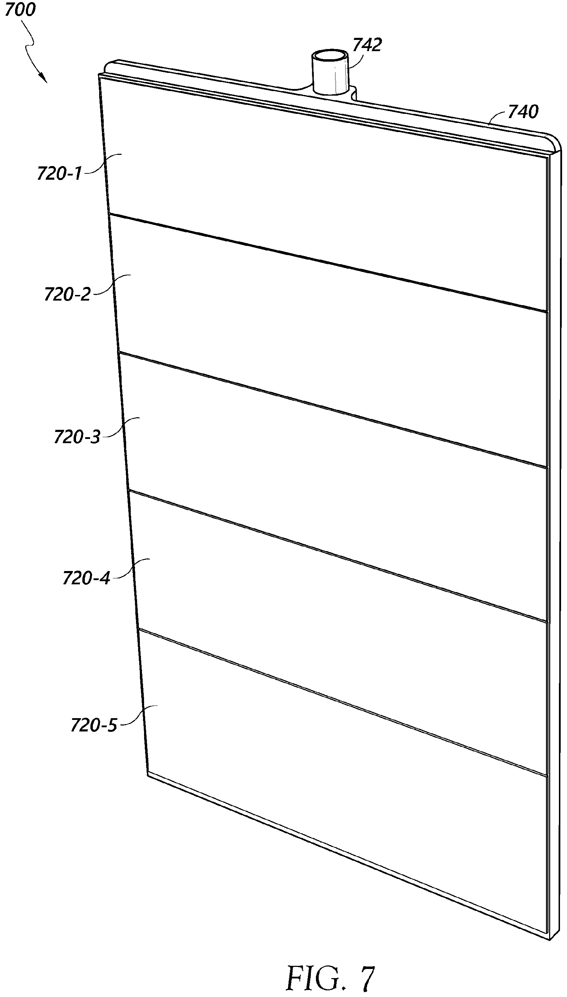

FIG. 7 illustrates a perspective view of a plate 700 The surface 720 illustrated in FIG. 7 mounts to a frame 746. In some embodiments, the surface 720 includes five separate panels: 720-1, 720-2, 720-3, 720-4, and 720-5.

In some embodiments, a section of the surface is porous, causing the section of the surface to be fluidized. In some embodiments, the majority of the surface is porous, causing the majority of the surface to be fluidized. In some embodiments, a section of the surface includes holes, causing the section of the surface to be fluidized. In some embodiments, the plurality of holes increases in frequency in a section of the surface. In some embodiments, the surface is made of stainless steel. In some embodiments, the surface is made of aluminum.

In some embodiments, a valve bank in fluid connection to the manifold can regulate the flow of gas through the surface, thereby regulating the fluidization of the surface. The valve bank can regulate the pressure in the pressure chambers and regulate the flow rate of gas from the manifold through the pressure chambers. The valve bank can also generate discrete puffs of gas which can pass through the surface. The valve bank can intermittently turn on and off the fluidization of the surface to cause small puffs of gas to pass through the pores of the surface. The valve bank can control the timing of the puffs, both the frequency and the duration. The valve bank can control the force of the puffs. The valve bank can regulate any of the variables discussed herein between the pressure chambers. For example, the valve bank can assure that the flow rate is constant across the entirety of the surface (i.e., the flow rate is the same for each pressure chamber). In another example, the valve bank can generate a flow gradient across the surface such that each row of pressure chambers generates a different flow rate. In some embodiments, the manifold is positioned under a portion of the surface, causing some of the surface to be fluidized.

In some embodiments, each surface of the plate may be welded and/or brazed onto the manifold or frame. In some embodiments, a section of the surface is porous, causing the section of the surface to be fluidized. In some embodiments, the majority of the surface is porous, causing the majority of the surface to be fluidized. In some embodiments, a section of the surface includes holes, causing the section of the surface to be fluidized. In some embodiments, the plurality of holes increases in frequency in a section of the surface. In some embodiments, the surface is stainless steel. In some embodiments, the surface is aluminum.

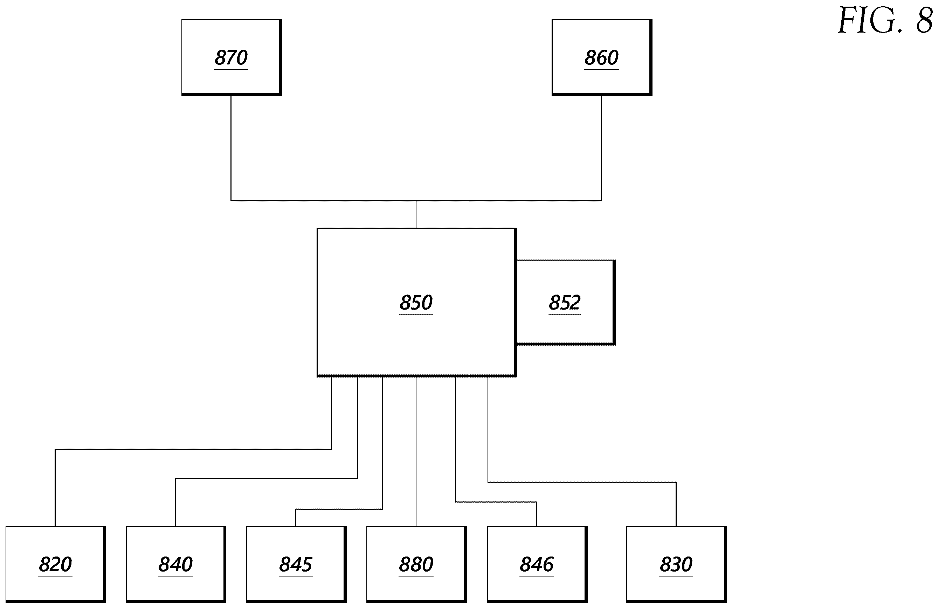

As illustrated in FIG. 8, a hopper sensor 870 and a roller sensor 860 communicate data with a processor 850 in some embodiments. The processor 850 communicates with an air supply 820, one or more manifolds 840, one or more valve banks 845, one or more linear actuators 880, one or more pivots 846, and one or more powder sources 830.

The processor 850 can comprise one or more integrated circuits. The processor 850 can comprise and/or have access to a memory 852. The processor 850 can comprise and/or be embodied as one or more chips, controllers such as microcontrollers (MCUs), and/or microprocessors (MPUs). The processor 850 can comprise a central processing unit (CPU). In some implementations, the processor 850 can be embodied as a system-on-a-chip (SoC). The processor 850 can be configured to implement an operating system which can allow multiple processes to execute simultaneously. The processor 850 can be configured to execute program instructions to control the quantity of powder distributed from the powder source 830 based on the data from the hopper sensor 870. The processor 850 can control the flow rate of powder out of the hopper by adjusting the air supply 820 based on the data from the roller sensor 860 and the hopper sensor 870. The processor 850 can control the flow rate of powder out of a hopper by adjusting the one or more valve banks 845 based on the data from the roller sensor 860 and the hopper sensor 870. The processor 850 can control the flow rate of powder out of the hopper by adjusting the linear actuator 880 based on the data from the roller sensor 860 and the hopper sensor 870. The processor 850 can control the flow rate of powder out of the hopper by adjusting the pivots 846 based on the data from the roller sensor 860 and the hopper sensor 870. The processor 850 can control the flow rate of powder out of the hopper by adjusting the powder source 830 based on the data from the roller sensor 860 and the hopper sensor 870.

In some embodiments, the powder utilized in systems and methods described may be a dry electrode material/mixture. In some embodiments, the dry electrode material is used to form an electrode film, such as a cathode electrode film or an anode electrode film. In some embodiments, an electrode is formed from the electrode film and a current collector. In some embodiments, the electrode film includes an active material. In some embodiments, the electrode film further comprises at least one binder. In some embodiments, the electrode film comprises the active material in an amount of, of about, of at least, or at least about, 70 wt.%, 75 wt.%, 80 wt.%, 81 wt.%, 82 wt.%, 83 wt.%, 84 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.% or 100 wt.%, or any range of values therebetween. The electrode film can be used in the formation of an energy storage device.

In some embodiments, an electrode film material and/or electrode film includes active cathode material. The active cathode material can form the dry electrode material (e.g., powder) discussed herein. In some embodiments, cathode active materials can comprise, for example, a metal oxide, metal sulfide, or a lithium metal oxide. The lithium metal oxide can be, for example, a lithium nickel manganese cobalt oxide (NMC), a lithium manganese oxide (LMO), a lithium iron phosphate (LFP), a lithium cobalt oxide (LCO), a lithium titanate (LTO), and/or a lithium nickel cobalt aluminum oxide (NCA). In some embodiments, cathode active materials can comprise, for example, a layered transition metal oxide (such as LiCoO2 (LCO), Li(NiMnCo)O2 (NMC) and/or LiNi0.8Co0.15Al0.05O2 (NCA)), a spinel manganese oxide (such as LiMn2O4 (LMO) and/or LiMn1.5Ni0.5O4 (LMNO)), an olivine (such as LiFePO4), silicon, silicon oxide (SiOx), aluminum, tin, tin oxide (SnOx), manganese oxide (MnOx), molybdenum oxide (MoO2), molybdenum disulfide (MoS2), nickel oxide (NiOx), or copper oxide (CuOx). The cathode active material can comprise sulfur or a material including sulfur, such as lithium sulfide (Li2S), or other sulfur-based materials, or a mixture thereof.

In some embodiments, the electrode film material and/or anode electrode film includes an anode active material. The anode active material can form the dry electrode material (e.g., powder) discussed herein. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, an electrode film material and/or electrode film comprises a carbon material configured to reversibly intercalate lithium ions. The carbon material can form a portion of the dry electrode material (e.g., powder) discussed herein. In some embodiments, the electrode film comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions.

In some embodiments, an electrode film material and/or electrode film includes a conductive additive. The conductive additive material can form a portion of the dry electrode material (e.g., powder) discussed herein. In some embodiments, the conductive additive may comprise a conductive carbon additive. In some embodiments, the conductive carbon additive comprises a carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film material and/or electrode film includes a binder. The binder can form a portion of the dry electrode material (e.g., powder) discussed herein. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the binder comprises, consists essentially, or consists of PVDF. In some embodiments, the electrode film comprises a binder in an amount of, of about, of at most, or at most about, 20 wt.%, 19 wt.%, 18 wt.%, 17 wt.%, 16 wt.%, 15 wt.%, 14 wt.%, 13 wt.%, 12 wt.%, 11 wt.%, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween.

As provided herein, a "solvent-free" electrode film is an electrode film that contains no detectable processing solvents, processing solvent residues, or processing solvent impurities. A dry electrode film, such as a cathode electrode film or an anode electrode film that is manufactured with only dry components, may be solvent-free.

A "wet" electrode, "wet process" electrode, or slurry electrode, is an electrode or comprises an electrode film prepared by at least one step involving a slurry of active material(s), binder(s), and optionally additive(s), even if a subsequent drying step removes moisture from the electrode or electrode film. Thus, a wet electrode or wet electrode film will include at least one or more processing solvents, processing solvent residues, and/or processing solvent impurities.

In some embodiments, the electrode film can be a wet processed electrode film. In some embodiments, the electrode film is prepared by a wet or slurry-based electrode fabrication process. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, the electrode film mixture can be calendered in a calender apparatus to form a free-standing fibrillized electrode film. In some embodiments, a calendered mixture forms a free-standing dry particle film free or substantially free from any liquids, solvents, and resulting residue therefrom. In some embodiments, the electrode film is an anode electrode film. In some embodiments, the electrode film is a cathode electrode film. In some embodiments, the process for fabricating an electrode film is a dry process, where no liquids or solvents are used and the listed raw materials are dry (e.g. one or more are dry powders) such that the resulting electrode film is free or substantially free of any liquids, solvents, and resulting residues.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂, lithium difluoro(oxalato)borate (LiC₂BF₂O₄) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under" are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the delivery systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. A powder dispensing apparatus, comprising:
a first planar plate comprising a fluidization section;
a second planar plate, wherein the first and second planar plates are positioned to form at least a portion of an elongate wedge-shaped hopper;
an outlet positioned at a first end of the elongate wedge-shaped hopper; and
an inlet positioned at a second end of the elongate wedge-shaped hopper, wherein the first and second ends are opposite ends of the elongate wedge-shaped hopper.

2. The powder dispensing apparatus of claim 1, wherein a first edge of the first planar plate and a first edge of the second planar plate define the outlet.

3. The powder dispensing apparatus of claim 1, wherein the fluidization section comprises a porous section, a pressure chamber, and a manifold, preferably wherein the porous section is configured to have compressed dry air pass therethrough.

4. The powder dispensing apparatus of any one of claims 1-3, further comprising a hopper depth sensor and/or a dispensed depth sensor.

5. The powder dispensing apparatus any one of claims 1-4, wherein:
the first planar plate is positioned on first plane;
the second planar plate is positioned on second plane; and
the first and second planes form a wedge with an intersection angle of about 10-170 degrees;
preferably wherein the second planar plate comprises a second fluidization section.

6. The powder dispensing apparatus of claim 1, wherein the first planar plate and the second planar plate are configured to pivot and/or wherein at least one of the first and second planar plates are rectangular in shape.

7. The powder dispensing apparatus of any one of claims 1-6, wherein the outlet is configured to open and close, preferably wherein the outlet is configured to have an open position, a closed position, and a dispensing position and/or further comprising a position controller.

8. The powder dispensing apparatus of any one of claims 1-7, further comprising a first pivot positioned along a second edge of the first planar plate and a second pivot positioned along a second edge of the second planar plate, preferably further comprising one or more actuators, more preferably wherein the one or more actuators are configured to rotate the first planar plate around the first pivot and the second planar plate around the second pivot.

9. A system for forming an energy storage device electrode film, comprising:
the powder dispensing apparatus of any one of claims 1-8; and
a calendering apparatus positioned below the outlet.

10. A method of powder distribution, the method comprising:
loading an elongate wedge-shaped hopper with a powder to form a bridged powder, wherein the elongate wedge-shaped hopper comprises a planar plate comprising a fluidization section;
applying a gas from the fluidization section to the bridged powder to form a fluidized powder; and
dispensing a linear stream of the fluidized powder out of an elongate outlet.

11. The method of claim 10, wherein applying the gas comprises intermittently applying the gas and/or further comprising stopping applying the gas to form a second bridged powder.

12. The method of Claim 10, further comprising adjusting a width of the elongate outlet.

13. The method of Claim 10, further comprising sensing a level of the powder in the elongate wedge-shaped hopper.

14. The method of any one of claims 10-13, further comprising opening the elongate outlet in the elongate wedge-shaped hopper and/or closing the elongate outlet in the elongate wedge-shaped hopper and/or adjusting a width of the elongate outlet.

15. The method of any one of claims 10-14, further comprising distributing the linear stream of the fluidized powder onto a pair of rollers of a calender roll device preferably further comprising sensing a level of the powder on the pair of rollers.
